# EUROPÄISCHE PATENTSCHRIFT

(11) **EP 1 522 441 B1**
(45) Veröffentlichungstag und Bekanntmachung des Hinweises auf die Patenterteilung: **29.08.2007**
(21) Anmeldenummer: 04022247.3
(22) Anmeldetag: 17.09.2004
(51) Int. Cl.: B60H 3/06

(54) **Filteranordnung**
Air filter unit
Filtre à air

(30) Priorität: 06.10.2003 DE 10346824
(43) Veröffentlichungstag der Anmeldung: 13.04.2005
(73) Patentinhaber: Behr GmbH & Co. KG, 70469 Stuttgart (DE)
(72) Erfinder: Boschert, Björn, 71254 Ditzingen (DE); Heberle, Arthur, Dr.-Ing., 68163 Mannheim (DE)

(56) Entgegenhaltungen:
- EP-A- 0 380 026
- EP-A- 0 744 309
- US-A1- 2003 157 881
- PATENT ABSTRACTS OF JAPAN Bd. 005, Nr. 204 (C-085), 24. Dezember 1981 (1981-12-24) -& JP 56 124420 A (HITACHI LTD), 30. September 1981 (1981-09-30)

## Beschreibung

Die Erfindung betrifft eine Filteranordnung, insbesondere für ein Kraftfahrzeug, gemäß dem Oberbegriff des Anspruchs 1.

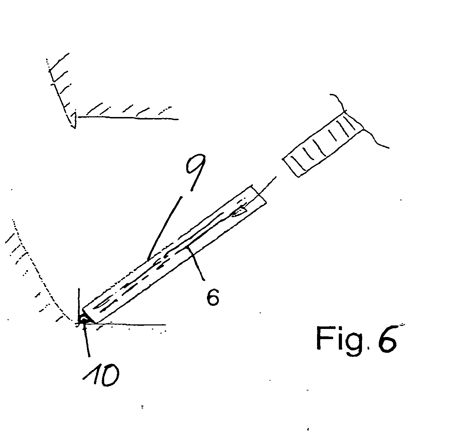

Ein Beispiel einer bekannten Filteranordnung 11 ist in Fig. 5 dargestellt. Hierbei werden Filter 13 durch eine seitliche Öffnung im Filtergehäuse 12 in einen hierfür vorgesehenen Schacht eingeschoben. Anschließend wird der Schacht mit einem Filterdeckel verschlossen. Insbesondere bei mangelndem Bauraum ist es oftmals nicht möglich den Filter in einfacher Weise direkt in den Schacht einzuführen.

JP 56124420 zeigt eine Filteranordnung gemäß dem Oberbegriff des Anspruchs 1.

Es ist Aufgabe der Erfindung, eine verbesserte Filteranordnung zur Verfügung zu stellen.

Diese Aufgabe wird gelöst durch eine Filteranordnung mit den Merkmalen des Anspruchs 1. Vorteilhafte Ausgestaltungen sind Gegenstand der Unteransprüche.

Erfindungsgemäß ist eine Filteranordnung, insbesondere für ein Belüftungssystem eines Kraftfahrzeugs, vorgesehen, mit einem Filtergehäuse, in dem ein Filter anordenbar ist, wobei eine Einführhilfe zum Einführen des Filters vorgesehen ist, so dass eine einfache Einführung und Positionierung im Filtergehäuse möglich ist.

Bevorzugt weist die Einführhilfe einen Radius auf, welcher ein leichteres Einführen ermöglicht.

Die erfindungsgemäße Einführhilfe umfasst mindestens eine als Führung dienende Nut, insbesondere zwei auf einander gegenüberliegenden Seiten des Führungsgehäuses ausgebildete Nuten, die der Führung eines am Filter angeordneten Gegenstücks dient, so dass nach Einsetzen des Gegenstücks in die Nut der Filter automatisch die richtige Endposition erreicht. Das Gegenstück kann durchaus auch mehrteilig ausgebildet sein, jedoch stabilisiert ein durchgehendes, auf beiden Seiten des Filters überstehendes Gegenstück den Filter, so dass er auch bei Betrieb möglichst eben ausgerichtet ist.

Erfindungsgemäß ist der Filter um eine durch das Gegenstück verlaufende Achse verschwenkbar, wenn er sich bereits am tiefsten Punkt, das heißt sich das Gegenstück am Ende der Nut(en), befindet.

Zur Fixierung des Filters im Filtergehäuse ist vorzugsweise eine Rastvorrichtung vorgesehen, die insbesondere als Clipsverbindung ausgebildet ist. Diese unterstützt die einfache und schnelle Auswechselbarkeit des Filters.

Im Folgenden wird die Erfindung anhand eines Ausführungsbeispiels unter Bezugnahme auf die Zeichnung im Einzelnen erläutert. In der Zeichnung zeigen:

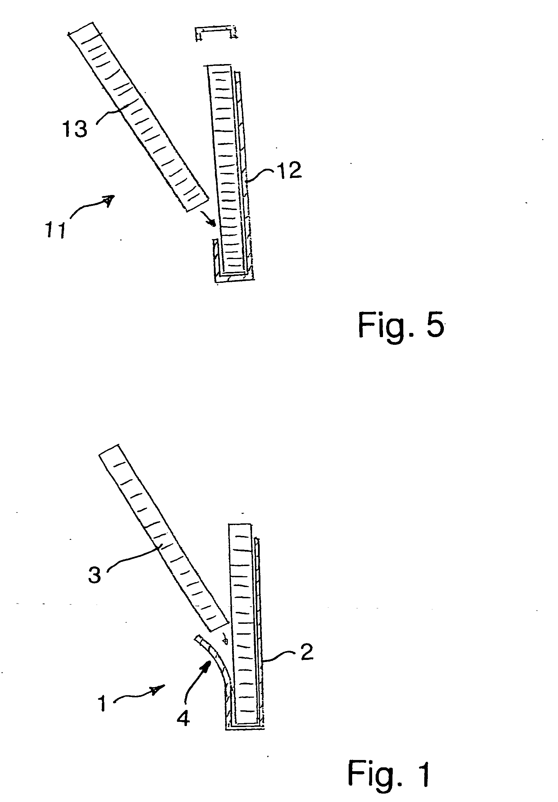

- Fig. 1: eine schematische Darstellung einer Filteranordnung gemäß dem Stand der Technik, wobei der Filter vor dem Einbau und in eingebautem Zustand dargestellt ist,
- Fig. 2: eine schematische Darstellung' eines ersten Ausführungsbeispiels, wobei der Filter vor dem Einbau und in eingebautem Zustand dargestellt ist,
- Fig. 3: eine Seitenansicht von Fig. 2,
- Fig. 4: eine schematische Darstellung eines zweiten Ausführungsbeispiels, wobei der Filter vor dem Einbau und in eingebautem Zustand dargestellt ist,
- Fig. 5: eine Filteranordnung gemäß dem Stand der Technik, wobei der Filter vor dem Einbau und in eingebautem Zustand dargestellt ist.
- Fig. 6: eine schematische Darstellung einer ähnlichen Filteranordnung, wobei der Filter vor dem Einbau mit einem Rahmen dargestellt ist,

Eine bekannte Filteranordnung 1, wie sie in einem Kraftfahrzeug-Belüftungssystem verwendet wird, weist ein Filtergehäuse 2 und einen Filter 3 auf, wobei das Filtergehäuse 2 derart ausgebildet ist, dass es eine Einführhilfe 4, vorliegend eine sich in einem Radius erweiternde Führung 5 für den Filter 3, aufweist. Durch den Radius der Einführhilfe 4 lässt sich der Filter 3 einfach in das Filtergehäuse 2 einführen und hierin positionieren.

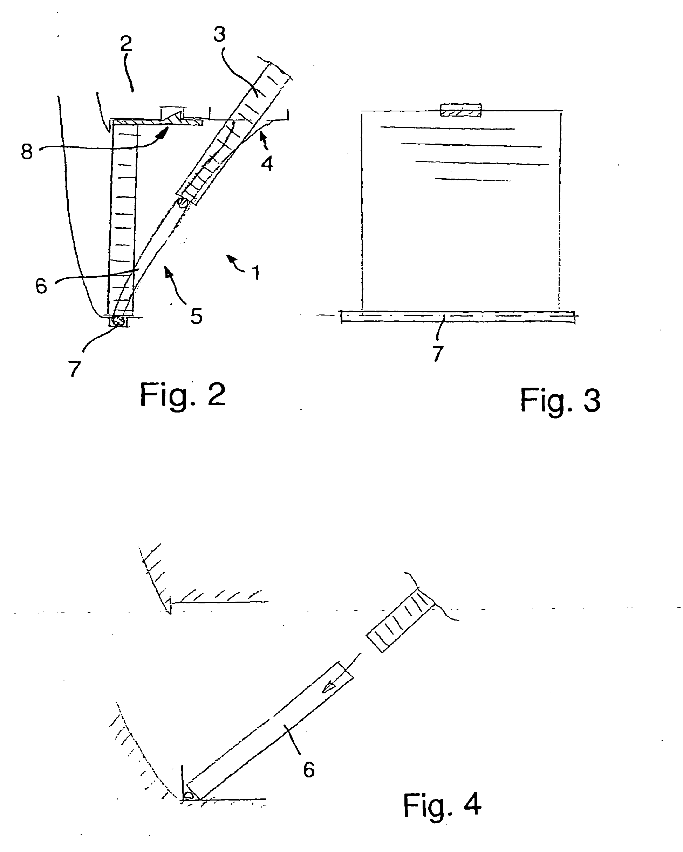

Gemäß einem in Fig. 2 dargestellten ersten Ausführungsbeispiel weist das Filtergehäuse 2 als Einführhilfe 4 seitlich jeweils eine im oberen Bereich erweiterte, in einem leichten Radius verlaufende Nut 6 die gleichzeitig als Führung 5 dient, auf. Ferner ist der Filter 2 mit einem entsprechenden Gegenstück 7 versehen, so dass er in den Nuten 6 schwenkbar geführt und im Filtergehäuse 2 positioniert werden kann. Hierfür wird er zuerst bis zum Ende der Nuten 6, das heißt der tiefsten Position des Filters 3 eingeführt und anschließend um eine durch das Gegenstück 7 verlaufende Achse verschwenkt, bis er seine Endposition erreicht und wunschgemäß am Filtergehäuse 2 anliegt. Das Gegenstück 7 ist gemäß dem vorliegenden Ausführungsbeispiel durchgehend ausgebildet, wobei es auf beiden Seiten des Filters 3 übersteht, und zum leichten Schwenken zumindest im unteren Bereich abgerundet ausgebildet. Femer besteht es aus einem ausreichend stabilen Material, welches die ebene Ausrichtung des Filters 3 beim Betrieb unterstützt.

Zur Sicherung der Endposition ist am dem Gegenstück 7 gegenüberliegenden Ende des Filters 3 ein Teil einer Rastvorrichtung 8 vorgesehen, welches mit einem zweiten Teil der Rastvorrichtung 8 zusammenwirkt. Dabei weist die Rastvorrichtung 8 vorzugsweise einen mit einem Vorsprung versehenen Federarm auf, wobei der Vorsprung in eine gemäß dem ersten Ausführungsbeispiel am Filtergehäuse 2 vorgesehene Vertiefung in Art einer Clipsverbindung eingreift. Der Federarm ist dabei derart ausgebildet, dass ein Entfernen des Filters 3 einfach und ohne Werkzeug möglich ist.

Fig. 4 zeigt eine Variante des ersten Ausführungsbeispiels, bei dem die Nuten 6 in gerader Richtung verlaufen und der Filter 3 nach Erreichen seiner tiefsten Position um die durch das Gegenstück 7 verlaufende Achse verschwenkt wird, bis er am Filtergehäuse 2 wunschgemäß anliegt.

Fig. 6 zeigt alternativ eine weitere Filteranordnung, bei der die Nuten 6 in gerader Richtung in einem Rahmen 9 verlaufen, wobei der Rahmen drehbar oder verschwenkbar um eine Schwenkachse 10 gelagert ist. Der Filter 3 wird in den Rahmen 9 eingeschoben und nach Erreichen seiner tiefsten Position mit dem Rahmen 9 um die Achse 10 verschwenkt, bis er am Filtergehäuse 2 wunschgemäß anliegt.

### Bezugszeichenliste

- 1, 11: Filteranordnung
- 2, 12: Filtergehäuse
- 3, 13: Filter
- 4: Einführhilfe
- 5: Führung
- 6: Nut
- 7: Gegenstück
- 8: Rastvorrichtung
- 9: Rahmen
- 10: Schwenkachse

## Patentansprüche

1. Filteranordnung, insbesondere für ein Belüftungssystem eines Kraftfahrzeugs, mit einem Filtergehäuse (2), in dem ein Filter (3) anordenbar und eine Einführhilfe (4) zum Einführen des Filters (3) vorgesehen ist, wobei die Einführhilfe (4) mindestens eine als Führung dienende Nut (6) aufweist und am Filter (3) ein Gegenstück (7) zur Nut (6) vorgesehen ist, das in der Nut (6) geführt ist, **dadurch gekennzeichnet, dass** der Filter (3) zum Positionieren im Filtergehäuse (2) um eine durch das Gegenstück (7) verlaufende Achse verschwenkbar ist.

2. Filteranordnung nach Anspruch 1, **dadurch gekennzeichnet, dass** die Einführhilfe (4) einen Radius aufweist.

3. Filteranordnung nach Anspruch 1 oder 2, **dadurch gekennzeichnet, dass** das Gegenstück (7) durchgehend auf einer Seite des Filters (3) und beidseitig überstehend ausgebildet ist.

4. Filteranordnung nach einem der vorhergehenden Ansprüche, **dadurch gekennzeichnet, dass** die Einführrichtung des Filters (3) in das Filtergehäuse (2) sich von der Ausrichtung des Filters (3) im Filtergehäuse (2) unterscheidet.

5. Filteranordnung nach einem der vorhergehenden Ansprüche, **dadurch gekennzeichnet, dass** die Filteranordnung (1) eine Rastvorrichtung (8) aufweist, wobei ein Teil der Rastvorrichtung (8) am Filter (3) und ein Teil der Rastvorrichtung (8) am Filtergehäuse (2) angeordnet ist.

6. Filteranordnung nach Anspruch 5, **dadurch gekennzeichnet, dass** die Rastvorrichtung (8) als Clipsverbindung mit einem am Filter (3) angeordneten Federarm mit Vorsprung und einer am Filtergehäuse (2) vorgesehenen Vertiefung oder Öffnung ausgebildet ist.

## Claims

1. An air filter unit, in particular for a ventilation system of a motor vehicle, having a filter housing (2) in which it is possible to position a filter (3) and there is provided an insertion aid (4) for inserting the filter (3), the insertion aid (4) having at least one channel (6) serving as a guide and there being provided on the filter (3) a counterpart (7) to the channel (6) which is mounted in the channel (6),
**characterised in that**
the filter (3) can be pivoted about an axis running through the counterpart (7) in order to position the filter housing (2).

2. An air filter unit in accordance with claim 1,
**characterised in that**
the insertion aid (4) has a radius.

3. An air filter unit in accordance with claim 1 or 2,
**characterised in that**
the counterpart (7) is designed such that it runs all along one side of the filter (3) and projects on both sides.

4. An air filter unit in accordance with one of the preceding claims,
**characterised in that**
the direction of insertion of the filter (3) into the filter housing (2) is different from the orientation of the filter (3) in the filter housing (2).

5. An air filter unit in accordance with one of the preceding claims,
**characterised in that**
the air filter unit (1) has a snap-in locking device (8), one part of the snap-in locking device (8) being positioned on the filter (3) and one part of the snap-in locking device (8) being positioned on the filter housing (2).

6. An air filter unit in accordance with claim 5,
**characterised in that**
the snap-in locking device (8) is designed as a clip connection with a spring arm with projection positioned on the filter (3) and a recess or opening provided on the filter housing (2).

## Revendications

1. Ensemble de filtrage, en particulier pour un système de ventilation d'un véhicule automobile, comportant un boîtier (2), dans lequel peut être posé un filtre (3) et dans lequel est prévu un auxiliaire d'introduction (4) pour l'introduction du filtre (3), l'auxiliaire d'introduction (4) comportant au moins une rainure (6) faisant fonction de guidage, et un élément complémentaire (7) à la rainure (6) étant prévu sur le filtre (3), lequel est guidé dans la rainure (6), **caractérisé en ce que** le filtre (3), en vue de son positionnement dans le boîtier (2), est apte à pivoter autour d'un axe qui s'étend à travers l'élément complémentaire (7).

2. Ensemble de filtrage selon la revendication 1, **caractérisé en ce que** l'auxiliaire d'introduction (4) comporte un rayon.

3. Ensemble de filtrage selon la revendication 1 ou 2, **caractérisé en ce que** l'élément complémentaire (7) est réalisé en continu sur un côté du filtre (3) et s'avance en saillie de part et d'autre.

4. Ensemble de filtrage selon l'une quelconque des revendications précédentes, **caractérisé en ce que** le sens d'introduction du filtre (3) dans le boîtier (2) se différencie de l'orientation du filtre (3) dans le boîtier (2).

5. Ensemble de filtrage selon l'une quelconque des revendications précédentes, **caractérisé en ce que** l'ensemble de filtrage (1) comporte un dispositif de blocage (8), une partie du dispositif de blocage (8) étant disposée sur le filtre (3) et une partie du dispositif de blocage (8) étant disposée sur le boîtier (2).

6. Ensemble de filtrage selon la revendication 5, **caractérisé en ce que** le dispositif de blocage (8) est réalisé sous la forme d'un assemblage à encliqueter comportant un bras de ressort avec une saillie, agencé sur le filtre (3), et un creux ou orifice prévu dans le boîtier (2).
